# EUROPÄISCHE PATENTANMELDUNG

(11) **EP 2 990 023 A1**
(43) Veröffentlichungstag der Anmeldung: **02.03.2016**
(21) Anmeldenummer: 14002936.4
(22) Anmeldetag: 24.08.2014
(51) Int. Cl.: A61H 33/06, F24H 3/00

(54) **Wärmekabinenheizung Hybrid**

(71) Anmelder: Paul Bemberg GmbH & Co. KG, 74336 Brackenheim (DE)
(72) Erfinder: Paul Bemberg GmbH & Co. KG, 74336 Brackenheim (DE)

(57) **Zusammenfassung**

Infrarotkabine mit Zusatzheizung, Dampfbadkabine mit Zusatzheizung, Sauna und/oder Infrarotkabine und/oder Dampfbadkabine mit Hybridheizung, bestehend aus einer nach Stand der Technik bestehenden Elektroheizung und/oder Gasheizung und/oder Ölheizung und/oder Feststoffheizung, in Hybrid kombiniert mit einer flüssigkeitsgeführten Wärmetauscherheizung die extern der Kabine zugeführte anderweitig erzeugte Wärme, vorzugsweise erzeugt durch die bereits im Haus und/oder in technischer Erreichbarkeit der Kabine befindliche Zentralheizung dem Kabinenheizsystem beimengt.

## Beschreibung

Die Erfindung betrifft eine Beheizung für Wärmekabinen der Typklassen Infrarotkabine mit Zusatzheizung und/oder Dampfbadkabine mit Zusatzheizung und/oder Sauna und/oder Infrarotkabine und/oder Dampfbadkabine. Ausschließlich für eine Sauna wurde ein Teil dieser Erfindung (s. Patentansprüche) bereits mit der zwischenzeitlich abgelaufenen Europäischen Patentschrift EP 0 287 106 B1 angemeldet und veröffentlicht. Die Anwendungen für Infrarotkabine mit Zusatzheizung und/oder Dampfbadkabine mit Zusatzheizung und/oder Sauna und/oder Infrarotkabine und/oder Dampfbadkabine wurden allerdings von dieser Patentschrift und dem aktuellen Stand der Technik insoweit nicht erfasst, dass die Erfindung EP 0 287 106 B1 nur für Sauna, nicht aber für Infrarotkabine mit Zusatzheizung und/oder Dampfbadkabine mit Zusatzheizung und/oder Infrarotkabine und/oder Dampfbadkabine ihre Zweckbestimmung und Anwendung gefunden hat und auch begrenzt auf Sauna zum Schutz angemeldet und veröffentlicht wurde. Auch der allgemeine Stand der Technik weißt seit der Anmeldepriorität 17.04.1987, DE 3713184 keine Weiterentwicklungen bzw. Schutzansprüche etwaiger anderer gegenzuhaltender Ansprüche dieser Beheizungsart auf. Außerdem ist das Hybridheizsystem mit flüssigkeitsgeführter Wärmetauscherheizung, der hier nunmehr zum Schutz angemeldeten Ausführung sowohl für Sauna und/oder Infrarotkabine mit Zusatzheizung und/oder Dampfbadkabine mit Zusatzheizung und/oder Infrarotkabine und/oder Dampfbadkabine neu. Die von der Erfindung betroffenen Wärmekabinen sind ausgestattet mit in verschiedenen Höhenlagen vorgesehenen Bänken zum Sitzen und/oder Liegen von Personen, deren ganze Körper sich im Kabinenraum befinden, und welche eine die Kabinenluftluft erhitzende Heizeinrichtung aufweist und bei der die abgekühlte Luft im Bereich des Bodens des Kabinenraumes abgeführt wird und wenigstens teilweise der Heizeinrichtung zur Wiederaufheizung zugeführt wird und wobei zur Vermeidung von Turbulenzen und zur Erzielung einer gleichmäßigen Temperaturschichtung mit geringer Sinkgeschwindigkeit der absinkenden Luft im Kabinenraum ein vom Kabinenraum bis auf untere Frischluft und Umluft einlassenden Lufteintrittsöffnungen und obere Heißluftaustrittsöffnungen völlig getrennter, nur einen Teil der Seite der Wand einnehmender Schacht vorgesehen ist, aus dem die erhitzte Luft nur im Bereich der Decke des Kabinenraumes in diesen übertritt, und wobei die Heizeinrichtung im Eckbereich zwischen senkrechtem Schachtabschnitt und Heißluftaustrittsöffnungen strömungsmäßig kurz vor diesen angeordnet ist. Aus DE-PS 19 23 496 ist eine Saunabeheizung bekannt, bei der zur Erzielung einer gleichmäßigeren Temperaturschichtung die die Sauna erwärmende Heißluft am oberen Ende eines Schachtes unmittelbar unter der Decke der Saunakabine austritt und dort gleichmäßig verteilt wird. Wieder aufzuwärmende Luft wird unmittelbar am Boden der Saunakabine dem Schacht zugeführt. Frischluft wird ebenfalls über den Schacht zugeführt. Abluft wird in geringem Abstand über dem Boden an einer vom Heißlufteintritt entfernten Stelle abgeführt. Die Heizeinrichtung kann im horizontalen Teil des Schachtes im Bereich seines oberen Endes vorgesehen sein. In der Praxis wird die Heizung jedoch im unteren Bereich eingebaut, weil dann eine bessere und gleichmäßigere Strömung im Schacht und im Austritt bewirkt wird, denn die bisherige Sauna arbeitet ohne Lüfter. Die Luftumwälzung wird nur durch sinnvolle Gestaltung der Abmessungen des Schachtes, der Lage der Austritts- und Eintrittsöffnungen und der Dimensionierung der Heizung bewirkt. Diese Saunabeheizung hat gegenüber der vorher nahezu ausschließlich gebräuchlichen Heizung mit einem im Raum stehenden Ofen den großen Vorteil, keine ungleichmäßige Strahlungserwärmung der verschiedenen Körperregionen des Saunabadenden zu erzeugen. Bei einem üblichen, im Saunaraum stehenden Ofen ist der Benutzer mit Teilkörperregionen dem Saunaofen näher als mit anderen Körperregionen. Das Beheizungssystem nach DE-PS 19 23 496 bewirkt eine ungewöhnlich gleichmäßige Temperaturschichtung. Dadurch werden die mit der Vertikalkonvektion in der üblichen Sauna auftretenden Turbulenzen vom Benutzer ferngehalten, so dass auch die der Hautoberfläche anliegende ruhende Luftschicht, welche nur einige Millimeter stark ist, nicht verletzt wird und die thermischen Übergangsbedingungen sehr günstig sind. Diese Saunabeheizung hat sich in 18 Jahren bestens bewährt. Sie benötigt jedoch eine auf die notwendige Größe der Heizung und die notwendige Größe des Schachtes Rücksicht nehmende Bauweise, welches für Sauna durch das Beheizungssystem nach EP 0 287 106 B1 erreicht wurde. Nicht erreicht wurde dieses bisher für Infrarotkabine mit Zusatzheizung und/oder Dampfbadkabine mit Zusatzheizung und/oder Infrarotkabine und/oder Dampfbadkabine. Außerdem wurde das Beheizungssystem nach EP 0 287 106 B1 bisher nicht auf ein energiesparendes Hybridheizsystem für Infrarotkabine mit Zusatzheizung und/oder Dampfbadkabine mit Zusatzheizung und/oder Sauna und/oder Infrarotkabine und/oder Dampfbadkabine erweitert.

Die Größe des Beheizungssystems richtet sich naturgemäß auch nach der jeweiligen Größe der Wärmekabine. Insbesondere in kleinen Kabinen für beengte Verhältnisse tritt der Raumverlust für den Heizschacht mit den sich aus der Querschnittsstärke der Heizung ergebenden Abmessungen beträchtlich in Erscheinung. Außerdem muss zur Erzielung einer vernünftigen Belüftung die Abluft noch in einem gewissen Abstand vom Boden abgeführt werden, um einen entsprechenden Sog in Folge der Temperaturdifferenz zur Außenluft zu erzeugen. Zwar kann diese Abluftöffnung schon wesentlich tiefer liegen als bei mit üblichen, im Raum stehenden Öfen ausgestatteten Kabinen, bei denen die Abluft mit etwa 70 °C abgeführt wird. Bei der bisherigen Schacht-Kabine muss die Abluft mit etwa 45 bis 50° C abgeführt werden. Entsprechend dem Luftdurchsatz geht damit beträchtliche Energie verloren. Demgemäß sind auch die Anschlusswerte für die Heizung noch relativ hoch. Frei im Saunaraum stehende Elektroumwälzöfen sind zwar aus "Kann der Elektro-Saunaofen in der Wesensart dem finnischen Saunaofen gleichgestellt werden? - Sanitäre Technik 1951, Seite 171 35 bis 175" bekannt. Diese nehmen jedoch auf die Luftbewegung keine Rücksicht und erzielen keine gleichmäßige Temperaturschichtung, was schon bei einem Vergleich ihrer aus dieser Druckschrift ersichtlichen Bauart mit der DE-PS 19 23 496 40 deutlich wird. Die mit hohem Luftdurchsatz in beträchtlichem Abstand unter der Decke kleinräumig austretende Luftströmung kann nicht mit der Beheizung verglichen werden, die zu einer gleichmäßigen Temperaturschichtung mit langsamer Sinkgeschwindigkeit führt. Diese Öfen sind auch seit Jahrzehnten nicht mehr gebaut worden und haben keine Anregung zu geben vermocht, Saunabeheizungssysteme für praktische Anwendungen zu verbessern. Klimakammern zur Erzeugung künstlichen Fiebers, beispielsweise nach der dänischen Patentschrift 63 048, weichen in ihrem Einsatz völlig von Infrarotkabine mit Zusatzheizung und/oder Dampfbadkabine mit Zusatzheizung und/oder Sauna und/oder Infrarotkabine und/oder Dampfbadkabine ab. Zum einen liegt der Kopf des Patienten außerhalb einer Öffnung, nur sein Rumpf wird behandelt. Die verwendeten Lüfter, Strömungsbedingungen, Beheizungssysteme und Be- und Entlüftungseinrichtungen sind nach dem Zweck der Erzeugung künstlichen Fiebers gestaltet und haben auch trotz der langen Bekanntheit und ihrer Abhandlung in der vorerwähnten Saunafachschrift und im Stand der Technik bis heute keine Anregung zu geben vermocht, eine Wärmekabinenbeheizung mit Hilfe eines sinnvoll gestalteten Lüfters und/oder regelbaren Hybridheizsystems und trotzdem mit einer der Temperaturschichtung entsprechenden Ausgestaltung vorzuschlagen. Aus der US-PS 3,452,369 ist ein Türheizelement für eine Ein-Personen-SaunaKabine bekannt, bei der die Heizstäbe in einem Blechgehäuse angeordnet sind, welches mit mehreren Wänden gestaltet ist und wobei der außerhalb des die Heizelemente aufweisenden Raumes liegende Bereich von getrennt geführter Luft umspült wird. Diese Heizeinrichtung arbeitet nur mit der durch Temperaturdifferenz zustande kommenden Luftströmung und birgt deshalb die Gefahr der Überhitzung in sich, weil kein zwangsweiser Luftdurchtritt erfolgt. In der beigefügten Wettbewerbsliteratur aus dem Jahre 2014 "Klafs Solarsauna und Green Sauna Paket" ist ersichtlich dass hier bei der Solarsauna mit direkt zugeführter Außenenergie, also durch direkte Sonneneinstrahlung eine Sauna beheizt wird und bei Wegfall der Sonneneinstrahlung die Sauna auch mit herkömmlicher Heiztechnik beheizt werden kann. Allerdings stellt dies keine Hybridheiztechnik mit flüssigkeitsgeführter Wärmetauscherheizung, gemäß der Erfindung hier da und löst auch nicht die zugrunde liegenden Probleme. Bei dem "Green Sauna Paket" handelt es sich um eine Saunakabine mit einer verbessert wärmeisolierten Saunadecke und einem Klimamanager aus der Automobiltechnik. Hierbei hat die verbessert wärmeisolierte Saunadecke die Aufgabe mehr Wärmeenergie in der Saunakabine zu halten, der Klimamanager hingegen bei verschlechterter Atemluft, diese erwärmte Atemluft gegen kühlere Frischluft von außerhalb der Kabine auszutauschen. Diese aus der Automobiltechnik abgeleitete Erfindung (hier Saunakabine im analogen Vergleich zur Fahrgastraumkabine eines Automobils) steht dem drastischen Problem in der Praxis gegenüber, dass bei der Fahrgastkabine eines Automobils Fenster und Türen, in der Regel auf längeren Fahrten geschlossen gehalten werden, allerdings bei einer Saunakabine, insbesondere bei einer gewerblichen Saunakabine durch stetig wechselnde Nutzer die Saunatür ständig geöffnet und wieder geschlossen wird, hier also ohnehin ein erheblicher unkontrollierter systemkonträrer Luftaustausch stattfindet. Auch diese Anwendung löst nicht die hier zugrunde liegenden Probleme.

Der Erfindung liegt die Aufgabe zugrunde, eine Kabinenbeheizung der eingangs genannten Art derart weiter auszubilden, dass bei geringerem Energieeinsatz und kleineren räumlichen Abmessungen die Beheizung einer Wärmekabine mit der durch die DE-PS 19 23 496 bekannt gewordenen gleichmäßigen Temperaturschichtung und langsamen Sinkgeschwindigkeit der Luft im ganzen Saunaraum und guter Belüftung ermöglicht wird und weiter verbessert wird. Erfindungsgemäß ist vorgesehen, dass in dem Schacht ein Lüfter für langsamen Luftdurchsatz vorgesehen ist und dass der Schacht am oberen Ende in eine unmittelbar unter der Decke angeordnete Verteildüse mündet, die wenigstens nach zwei Seiten oder von der Ecke des Kabinenraumes aus diagonal Warmluft unter der Unterfläche der Decke sich verteilend abgibt und das die Heizeinrichtungen und Heißluftführungen mit Zwischenwänden umgeben sind, die von kühlerer, aus dem Schacht vor der Heizeinrichtung abgezweigter Luft umspült werden. Nunmehr wurde erkannt, das durch ganz spezielle Ausgestaltung von Lüfter und / oder Thermik - Heizung und Luftführung eine Zwangsbewegung der Luft mit einem an sich bekannten Lüfter und / oder Thermik - Heizung dann sinnvoll gestaltet werden kann, wenn man gleichzeitig die Lage der Heizung und die Ausgestaltung der Verteildüse berücksichtigt und den Luftdurchsatz genau nach den Gesamtbedürfnissen des Raumes so abstimmt und die Größen des Luftaustritts und die Widerstände im gesamten Kanal und Austrittsbereich so gestaltet, dass die erhitzte Luft langsam und gleichmäßig austritt und sich unmittelbar unter der Decke, eine gleichmäßige Schichtung bewirkend verteilt. Dabei wirken der Lüfter und oder die Thermik Heizung, die Verteildüse und die Kühlung des Schachtbereiches der Heizeinrichtung zusammen. Durch die zwangsweise mit dem geeignet groß dimensionierten und langsam laufenden Lüfter und / oder der Thermik - Heizung erzeugte Luftbewegung im Schacht kann dieser so dünn gestaltet werden, dass er keinen Nutzraum beansprucht. Da die Luft im Schacht nicht als Heißluft, sondern nur mit der der Umwälzung und/oder der Zumischung entsprechenden niederen Temperatur geführt wird, sind auch keine Schutzmaßnahmen im Schachtbereich erforderlich, sondern nur im Bereich der eigentlichen Heizelemente. Diese liegen jedoch nicht im Nutzbereich, sondern in der oberen Ecke des Kabinenraums, in dem sich ohnehin niemand aufhalten kann. Die Verteildüse kann sehr flach gestaltet werden und nimmt damit auch keinen nutzbaren Raum der Gesamtsaunakabine in Anspruch. Durch die Verwendung eines Lüfters und die sinnvolle Abstimmung Schacht und Verteildüse können die guten Be- und Entlüftungsverhältnisse der bekannten Schachtsauna ohne Lüfter weiter verbessert werden, denn nun lässt sich die Wärmekabine mit einem noch etwas mehr gesteigerten, geringen Überdruck im Kabinenraum betreiben und die Dosierung von Frischluft lässt sich noch besser beeinflussen. Die konventionelle Sauna mit freistehendem Ofen wird mit geringem Unterdruck betrieben, so dass der Luftwechsel nur durch Abgabe relativ warmer Luft ermöglicht wird. Eine mit geringem Überdruck betriebene Wärmekabine gewährleistet auch bei ungünstigen Wetterbedingungen oder Luftführungsbedingungen im Umgebungsraum bessere Luftverhältnisse. Den langsam und mit geringem Luftdurchsatz laufenden Lüfter und /oder Thermik Heizelement gestaltet man zweckmäßig einstellbar bezüglich Drehzahl bzw. Luftdurchsatz. Man kann dann den Luftdurchsatz genau auf die jeweiligen Verhältnisse und nach den Gegebenheiten der Wärmekabine bezüglich Zuluft, Abluft und ggf. den Wünschen des Benutzers einstellen. Die Einsteileinrichtung wird zweckmäßig auf einen Wert oder Einstellbereich feststellbar bzw. begrenzbar gestaltet, damit keine unbeabsichtigten ungünstigen Verstellungen vorgenommen werden können. Die Luftablassöffnungen bzw. den Luftaustritt sieht man zweckmäßig im untersten Bereich der Wärmekabine an einer vom Luftübertritt zwischen Verteildüse und Kabinenraum entfernten Stelle, vorzugsweise ohne Einstellschieber vor. Da mit Zwangsumwälzung und geringfügig erhöhtem Überdruck gearbeitet wird, kann man nunmehr die kälteste Luft unmittelbar am Boden abführen und erhält dadurch einen beträchtlichen Gewinn bezüglich des erforderlichen Energieeinsatzes. Dabei ist es zweckmäßig, die Kabinenwände im Abstand von der jeweiligen Gebäudebegrenzung zu führen und den Bereich des Frischlufteinlasses vom Abluftauslass durch entsprechende Zwischenwände, Abdichtungen oder dgl. so zu trennen, dass die Kabine von zwangsgeführter Zuluft bzw. zwangsgeführter Abluft umspült wird. So tritt in der Kabine und im gesamten Umgebungsraum durch die Schachtwirkungen eine stets sinnvolle Luftströmung ein, die auch dann aufrechterhalten bleibt, wenn die Kabine nicht beheizt und der Lüfter nicht angetrieben werden, zumindest in einem solchen Umfang, dass ein hinreichender Luftwechsel in entlegenen Bereichen stattfindet und damit keine stickige Luft entstehen kann. Der Lüfter ist zweckmäßig als ein sich im Wesentlichen über die ganze Breite des Schachtes erstreckender Trommellüfter gestaltet. Dann kann man den ganzen Schacht ohne besondere Luftführungsmaßnahmen und bei völlig fehlendem oder allenfalls ganz geringem Luftgeräusch gleichmäßig beaufschlagen. Da die Erwärmung der Luft erst im oberen Endbereich erfolgt, kann der Lüfter an beliebiger Stelle je nach den konstruktiven Gegebenheiten untergebracht werden. So lässt er sich zweckmäßig in den ohnehin nicht für den Kabinenbetrieb genutzten Raumbereichen unter den Bänken anordnen. Der Heizschacht kann dort eine größere Dicke aufweisen und in diesem verdickten Bereich den Lüfter und/ oder im Falle des Verwenden eines den Thermikstrom erzeugenden Heizelementes eben dieses aufnehmen. Die Dicke des die Luft führenden Schachtes kann etwa der Dicke der Isolationsschicht der sonstigen Kabinenwände entsprechen, so dass der Schacht unmittelbar unter der Holzverkleidung liegt. Da durch die Holzverkleidung hindurch tretende Wärme von der durchströmenden Luft aufgenommen wird, kann spezielle Isolierung an dieser Stelle ganz oder nahezu vollständig entfallen. Dadurch wird insbesondere bei beengten Platzverhältnissen ein weiterer Nutzraumgewinn erzielt. Im Lufteintrittsbereich des Heizschachtes werden zweckmäßig getrennte Zuführöffnungen für wiederaufzuwärmende Raumluft und Frischluft vorgesehen, denen einstellbare Schieber zugeordnet sind. So kann man den jeweiligen Wünschen und Bedürfnissen entsprechend den Anteil von Frischluft, den Anteil von wiederaufzuwärmender Raumluft und den Anteil von hinauszudrückender Raumluft durch Schiebereinstellungen in einem einzigen Raumbereich bestimmen. Diese lassen sich auch besser betätigen und aufeinander abstimmen. Darüber hinaus können sie zu konstruktiven Einheiten oder Teileinheiten vereinigt und ggf. mit weiteren Bauteilen vereinigt werden. Zweckmäßig liegen die Öffnungen für wiederzuerwärmende Raumluft und Frischluft unmittelbar nebeneinander und haben einen gemeinsamen, über den Öffnungen derart einstellbaren Schieber, dass beim Vergrößern des Querschnittes der einen Öffnung der Querschnitt der anderen Öffnung sich verringert und umgekehrt. Dem Einstellschieber bzw. den Einstellschiebern werden zweckmäßig Ferneinstelleinrichtungen zugeordnet, die oberhalb der Bänke mit wenigstens einer Handhabe ausgestattet werden können. So kann man die Luftverhältnisse während des Badebetriebes leicht den Bedürfnissen entsprechend einstellen. Den oder die Einstellschieber kann man jedoch auch eine von Kabinenbenutzungsfaktoren abhängig arbeitende automatische Einsteileinrichtung zuordnen. Diese kann z.B. Temperatur, Luftgeschwindigkeit, Luftzusammensetzung erfassen und nach vorgegebenen Bedingungen beeinflussen. Den oder die Einstellschieber mit Aufhängung und Betätigung kann man zu einer gemeinsamen Baueinheit mit dem Lüfter und seinen Luftführungselementen und ggf. seinem Gehäuse vereinigen. So kann man industriell alle die Luftbewegung und den Luftdurchsatz bewirkenden und einstellenden Elemente in großer Stückzahl preiswertproduzieren, leicht transportieren, leicht montieren und braucht bei der Montage nicht auf Ausrichtung und Zuordnung zu achten. Dabei können für verschiedene Kabinengrößen in gewissen Bereichen gleich große Baueinheiten verwendet werden, die nur durch Änderung des Luftvolumenstromes an die Individualverhältnisse angepasst werden. Im Übrigen kann man bei gleicher Querschnittsgestaltung nur verschieden lange Baueinheiten für Wärmekabinen mit sehr stark unterschiedlichen Abmessungen rationell fertigen. Gleiche Gesichtspunkte sind auch für die Gestaltung der Heizeinrichtungen, der Verteildüse und der Heißluftführungen, Zwischenwände und Abdeckungen zu berücksichtigen. Diese sind sowohl nach den Benutzungsbedürfnissen als auch bezüglich der Herstellung, Lagerung, des Versandes und des Einbaus zu gestalten. Dabei können die Abdeckungen der Heizeinrichtungen oder Heizregister mit den die Verteildüse bildenden Blechen einheitlich gestaltet sein. So ergibt sich auch eine Baueinheit von Heiz- und Verteilelementen. Dabei können die übereinander auf Abstand angeordneten, die verschieden warmen Luftströmungen führenden Bleche mit Distanzelementen untereinander verbunden und ggf. an den Kabinenbauteilen oder ihren Umfassungen befestigt sein. Wegen der Gesamtgestaltung einer Wärmekabine aus Holz werden die Verteildüse und der Bereich der Heizeinrichtungen zweckmäßig hier auch mit einer Holzverkleidung versehen, die wiederum mit Abstand zu den Blechen zwecks Umspülung mit kälterer Luft zu gestalten ist. Die Heizeinrichtungen werden zweckmäßig von mit vertikal verlaufenden Wärmetauschflächen ausgestatteten Heizregistern gebildet. So kann die Luft gut durchströmen, die Wärme gut aufnehmen und andererseits sind die benachbarten Bereiche der Luftführung und der Kabinenkonstruktion den geringsten Wärmestrahlungen ausgesetzt. Die Heizeinrichtung oder Heizregister kann man an verschiedenen Stellen im oberen Eckbereich anordnen, je nachdem, wie man den Schachtaufbau, die Luftumlenkung, die Düsenanordnung und den Einbau gestalten will. Zweckmäßig ist es, wenn die Heizregister im horizontalen Teil des Luftführungsschachtes unmittelbar vor den Verteildüsen angeordnet sind. In diesem Eckbereich ist ohnehin ohne Nutzraumverlust Platz genug vorhanden. Man kann dann die ganze Heizeinrichtung günstig als Baueinheit mit der Verteildüse industriell vorfertigen und so auf werkseitig abgestimmte Luftführung vor und hinter den Heizregistern optimal achten. Den Heizregistern wird dabei zweckmäßig ein den Eckbereich zwischen vertikalem Luftführungsschacht und Heizregistern bildender, vorzugsweise aus Blech bestehender Umlenkteil vorgeschaltet. Dadurch gewährleistet man sicheren und der vorgesehenen Luftführung genau entsprechenden Einbau der erforderlichen Teile, die sich industriell und für verschiedene Kabinentypen gut vorfertigen lassen. Zweckmäßig erweitert sich der Umlenkteil zwischen vertikalem Luftführungsschacht und dem Bereich vor den Heizregistern, so dass mit relativ kleinem vertikalen, relativ kalte Luft führenden Schacht auszukommen ist, jedoch für die Aufwärmung möglichst große Querschnitte zur Verfügung stehen. Das ist auch ohne Beeinträchtigung der Raumnutzung in diesem Raumbereich der Wärmekabine möglich. Weitere Ausgestaltungen, Gesichtspunkte, Vorteile und Merkmale der Erfindung ergeben sich auch aus dem nachfolgenden, anhand der Zeichnungen abgehandelten Beschreibungsteil wichtiger Ausführungen und Einzelheiten der Erfindung.

### Ausführungsbeispiele der Beschreibung

Zwei Ausführungsbeispiele der Erfindung werden nachfolgend anhand der Zeichnungen erläutert. Die Fig. 1 bis 7. allein zeigen das erste Ausführungsbeispiel ohne Hybridheizsystem der Anwendungen für Infrarotkabine mit Zusatzheizung und/oder Dampfbadkabine mit Zusatzheizung und/oder Infrarotkabine und/oder Dampfbadkabine. Durch die Hinzunahme der Zeichnungen Fig. 8 und Fig. 9 zeigt sich das zweite Ausführungsbeispiel mit Hybridheizsystem der Anwendungen für Infrarotkabine mit Zusatzheizung und/oder Dampfbadkabine mit Zusatzheizung und/oder Sauna und/oder Infrarotkabine und/oder Dampfbadkabine:
Es zeigen:

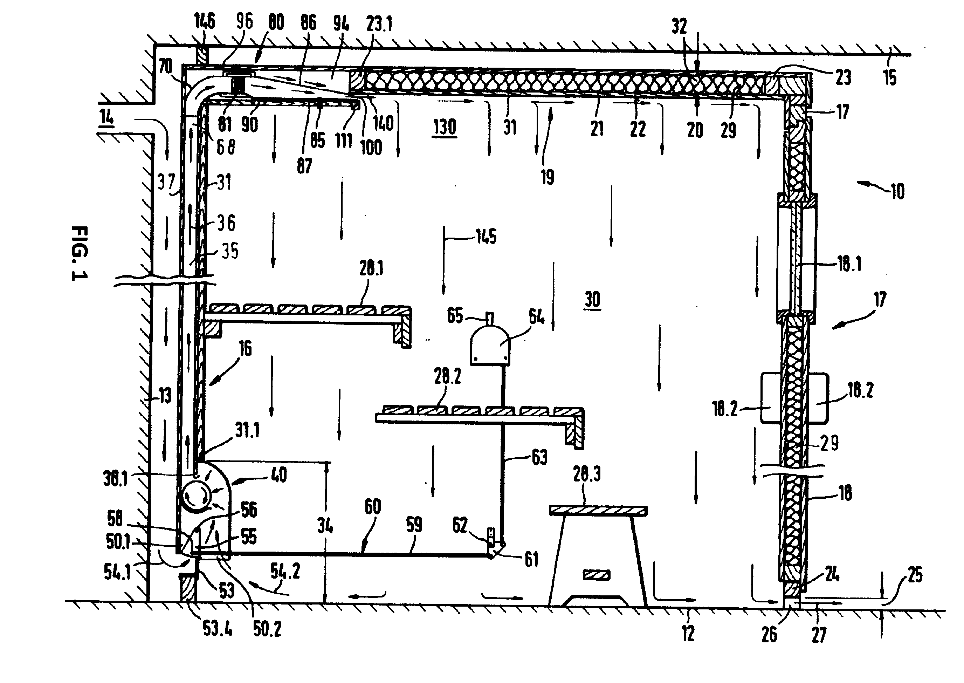

   Fig.1 Einen Vertikalquerschnitt durch eine Wärmekabine im Bereich von Lüfter, Schacht, Heizeinrichtung und Verteildüse;

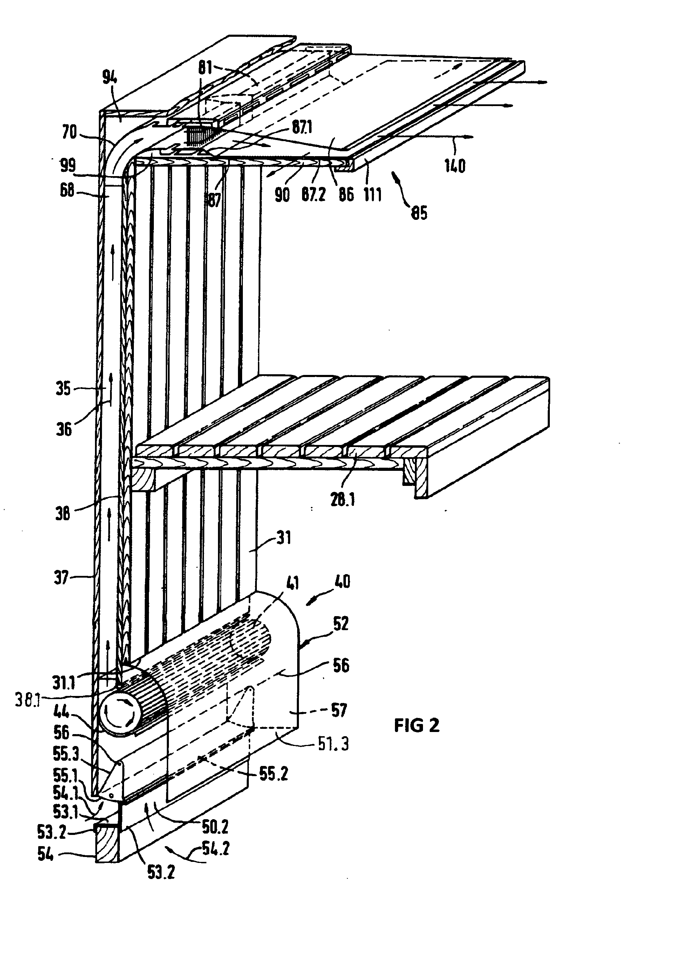

   Fig. 2 eine zum Teil aufgebrochene räumliche Darstellung von Lufteintritt, Einstellschieber, Lüfter, Luftführungsschacht, Umlenkeinrichtung, Heizregister und Verteildüse mit Darstellung der Wandverkleidungen und eines Teiles einer Bank;

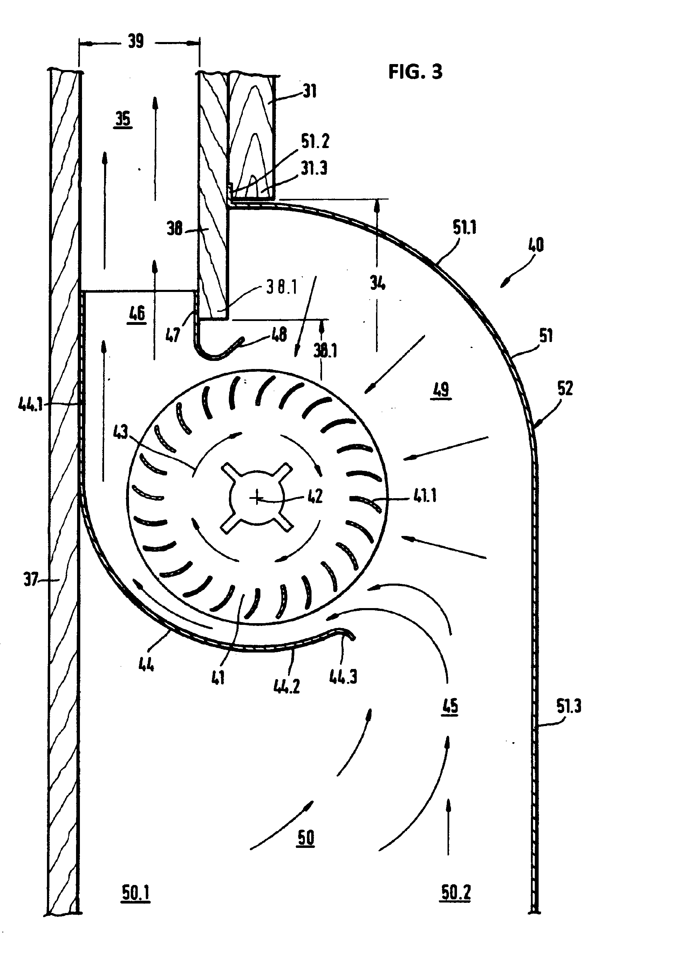

   Fig. 3 einen vergrößerten Vertikalteilschnitt durch den Lüfter mit angrenzenden Elementen;

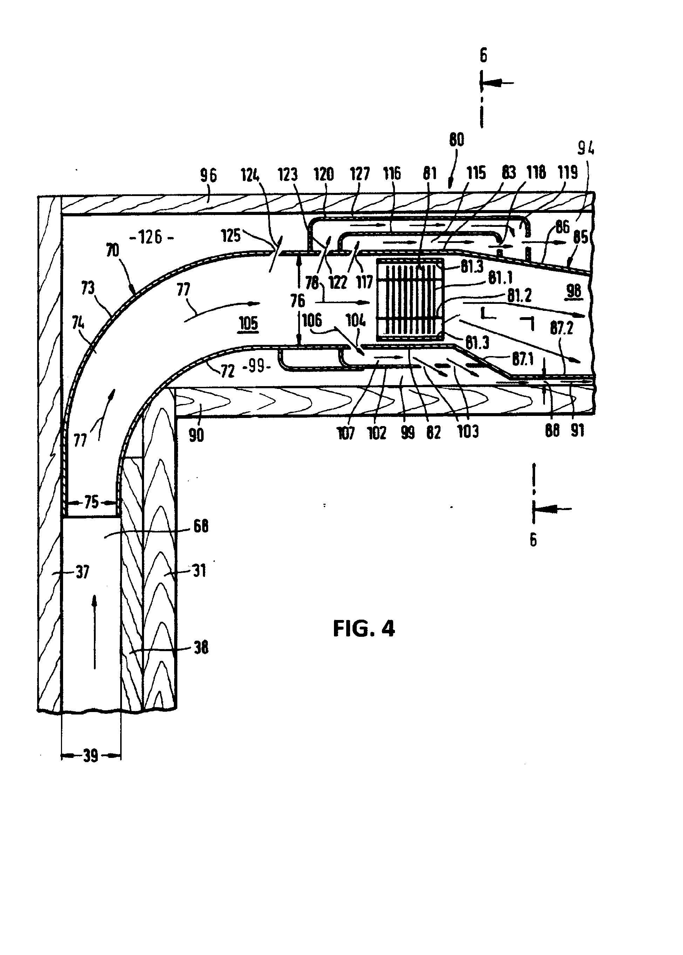

   Fig. 4 einen Teilvertikalschnitt durch den oberen Eckbereich mit Umlenkung, Heizregistern und Teilen der Luftführung, wobei das hinter der Zeichenebene liegende Düsenabdeckholz der Übersichtlichkeit halber weggelassen ist;

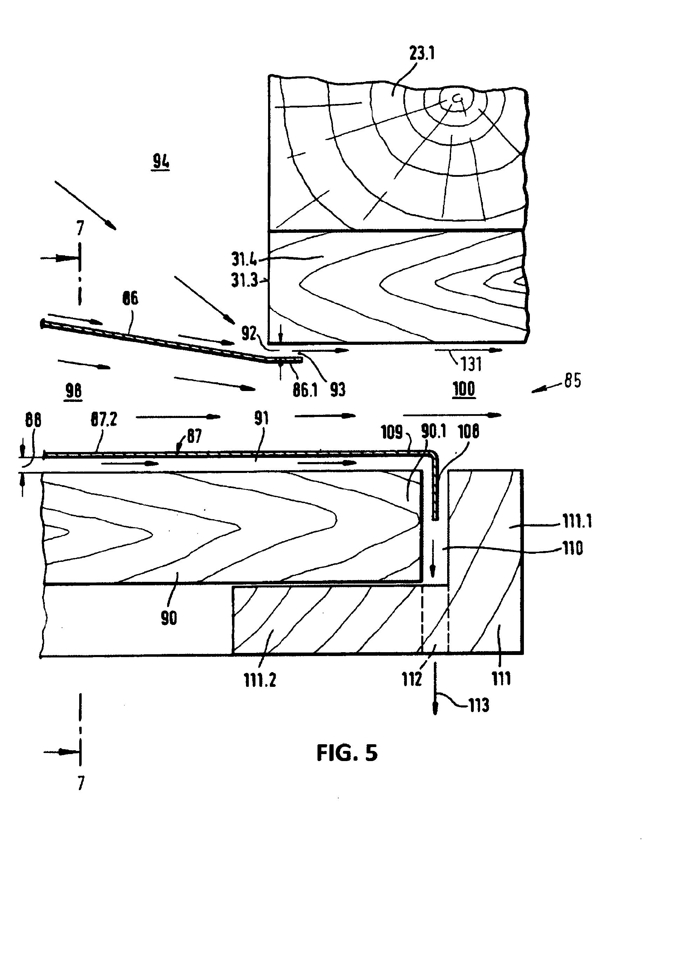

   Fig. 5 einen Teilvertikalschnitt im Bereich des Austrittsendes der Verteildüse;

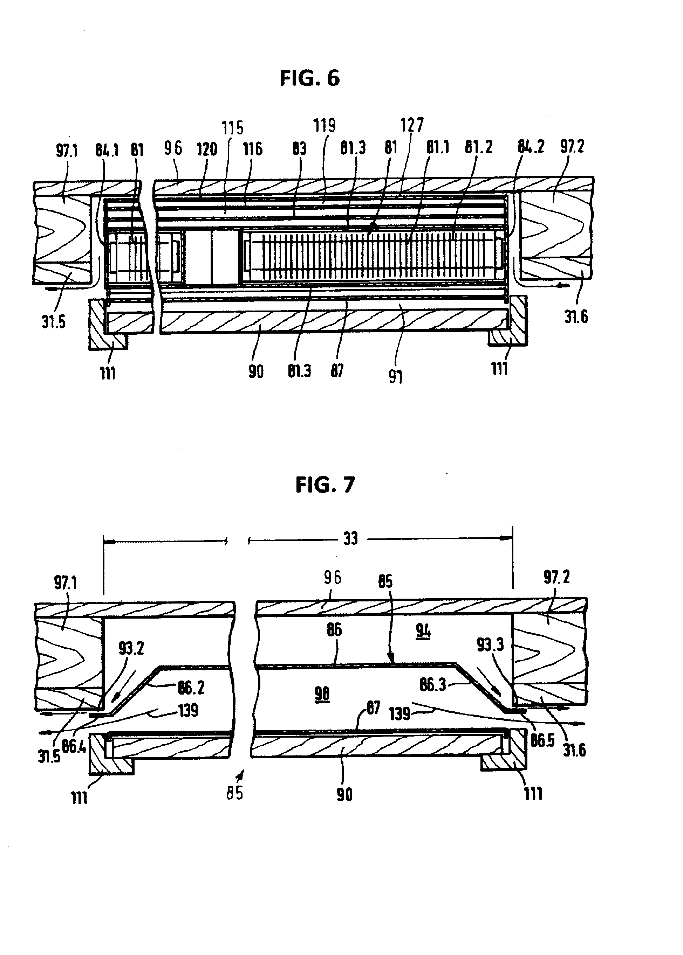

   Fig. 6 einen Vertikalschnitt längs der Linie 6- 6 in Fig. 4 mit Blick auf die Heizeinrichtung.
   Fig. 7 einen Vertikalschnitt längs der Linie 7- 7 in Fig. 5 durch den Luftaustritt im Bereich des Endes der Verteildüse.

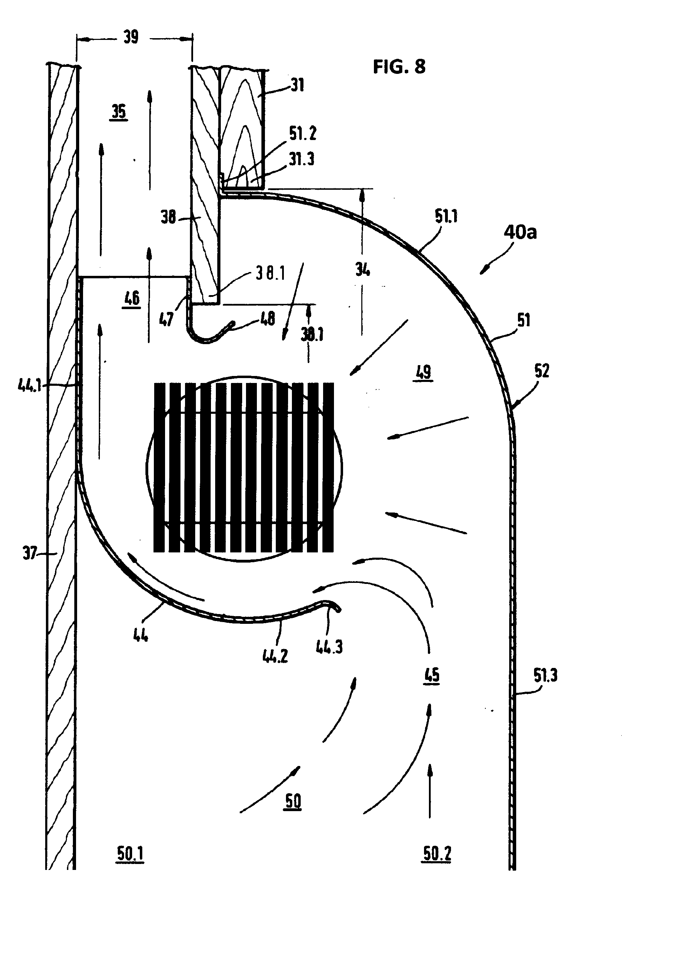

   Fig. 8 einen vergrößerten Vertikalteilschnitt durch den unteren Teil des Hybridheizsystems hier ausgeführt als Unterbankheizsystem ohne Lüfter mit angrenzenden Elementen;

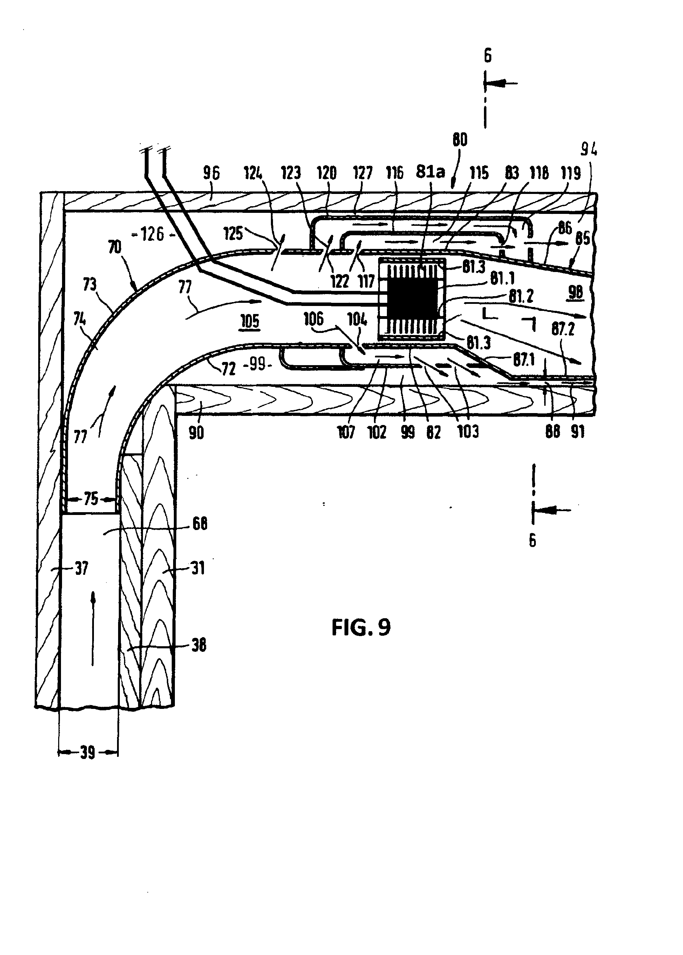

   Fig. 9 einen Teilvertikalschnitt durch den oberen Eckbereich des Hybridheizsystems mit Umlenkung, flüssigkeitsgeführter Wärmetauscherheizung und Teilen der Luftführung, wobei das hinter der Zeichenebene liegende Düsenabdeckholz der Übersichtlichkeit halber weggelassen ist.

## Patentansprüche

1. Erweiterungspatentanspruch der, aus dem nachfolgenden Patentanspruches für Sauna mit Saunabeheizung bekannten (Europäische Patentschrift EP 0 287 106 B1), aber für diesen Teil abgelaufenen Patentanspruches für nunmehr nachfolgende neue Erfindung und neue Anwendung, mithin Neupatentanspruch für:
Infrarotkabine mit Zusatzheizung, Dampfbadkabine mit Zusatzheizung, Sauna (Sauna mit Ausschluss der Patentansprüche aus EP 0 287 106 B1) und/oder Infrarotkabine und/oder Dampfbadkabine mit Hybridheizung, bestehend aus einer nach Stand der Technik bestehenden Elektroheizung und/oder Gasheizung und/oder Ölheizung und/oder Feststoffheizung, in Hybrid kombiniert mit einer flüssigkeitsgeführten Wärmetauscherheizung die extern der Kabine zugeführte anderweitig erzeugte Wärme, vorzugsweise erzeugt durch die bereits im Haus und/oder in technischer Erreichbarkeit der Kabine befindliche Zentralheizung dem Kabinenheizsystem beimengt. Mit in der Kabine in verschiedenen Höhenlagen vorgesehenen Bänken (28.1,28.2, 28.3) zum Sitzen und/oder Liegen von Personen, deren ganze Körper sich im Kabinenraum (30) befinden, und welche die beschriebenen die Kabinenluft erhitzende Heizeinrichtungen aufweisen und bei der die abgekühlte Luft im Bereich des Bodens (12) des Kabinenraumes (30) abgeführt wird und wenigstens teilweise (54.2,50.2) der Heizeinrichtung (80) zur Wiederaufheizung zugeführt wird und wobei zur Vermeidung von Turbulenzen und zur Erzielung einer gleichmäßigen Temperaturschichtung mit geringer Sinkgeschwindigkeit der ab- sinkenden Luft(145) im Kabinenraum (30) eine vom Kabinenraum (30) bis auf untere Frischluft und Umluft einlassenden Lufteintrittsöffnungen (, 50.1, 50.2) und obere Heißluftaustrittsöffnungen (100) völlig getrennter, nur einen Teil der Seite der Wand (16) einnehmender Schacht (35) vorgesehen ist, aus dem die erhitzte Luft nur im Bereich der Decke (20) des Kabinenraumes (30) in diesen übertritt, und wobei die Heizeinrichtung (80) im Eckbereich zwischen senkrechtem Schachtabschnitt (35) und Heißluftaustrittsöffnungen (100) strömungsmäßig kurz vor diesen angeordnet ist, **dadurch gekennzeichnet, dass** in dem Schacht (35) ein Lüfter (40) für langsamen Luftdurchsatz vorgesehen ist und dass der Schacht (35) am oberen Ende (68) in eine unmittelbar unter der Decke (20) der Kabine (10) angeordnete Verteildüse (85) mündet, die wenigstens nach zwei Seiten oder von der Ecke des Kabinenraumes (30) aus diagonal Warmluft unter der Unterfläche (22) der Decke (20) sich verteilend abgibt und dass die Heizeinrichtungen (80, 81) und Heißluftführungen (Düsenwände 86, 87) mit Zwischenwänden (102, 116, 120) umgeben sind, die von kühlerer, aus dem Schacht (35; 105) vor der Heizeinrichtung (80) abgezweigter Luft (106,113,123,124) umspült werden.

2. Erfindung nach einem oder mehreren der übrigen Ansprüche, **dadurch gekennzeichnet, dass** der Lüfter (40) bezüglich Drehzahl bzw. Luftdurchsatz einstellbar, vorzugsweise auf einen festen Wert einstellbar oder durch einen Verstellbereich begrenzbar ist.

3. Erfindung nach einem oder mehreren der übrigen Ansprüche, **dadurch gekennzeichnet, dass** die Luftaustrittsöffnungen (26) im untersten Bereich (12) der Kabine (10) an einer vom Luftübertritt (100) zwischen Verteildüse (85) und Kabinenraum (30) entfernten Stelle, vorzugsweise ohne Einstellschieber angeordnet sind.

4. Erfindung nach einem oder mehreren der übrigen Ansprüche, **dadurch gekennzeichnet, dass** die Kabinenwände (16,17) und die Deckwand (19) mit Abstand von der jeweiligen Gebäudebegrenzung (13,15) angeordnet sind und der Bereich des Frischlufteinlasses (14) durch entsprechende Zwischenwände, Abdichtungen (146) oder dgl. von dem außerhalb der Kabine (10) liegenden Abluftbereich so getrennt ist, dass die Kabine (10) von zwangsgeführter Zuluft bzw. zwangsgeführter Abluft umspült wird.

5. Erfindung nach einem oder mehreren der übrigen Ansprüche, **dadurch gekennzeichnet, dass** der Lüfter (40) ein sich im Wesentlichen über die ganze Breite (33) des Schachtes (35) erstreckender Trommellüfter (40, 41) ist.

6. Erfindung nach einem oder mehreren der übrigen Ansprüche, **dadurch gekennzeichnet, dass** die Stärke (39) des die Luft führenden Schachtes (35) etwa der Stärke (32) der Isolierung (29) der Kabinenwände entspricht und der Schacht (35) unmittelbar unter der Verschalung (31, 38) liegt.

7. Erfindung nach einem oder mehreren der übrigen Ansprüche, **dadurch gekennzeichnet, dass** der Schacht (35) im Bereich unter einer Bank(28.1) eine größere Stärke aufweist und in diesem Bereich der Lüfter (40) und/oder der eine Teil des Hybridheizsystems vorgesehen ist.

8. Erfindung nach einem oder mehreren der übrigen Ansprüche, **dadurch gekennzeichnet, dass** im Lufteintrittsbereich des Schachtes (35) getrennte Lufteintrittsöffnungen (50.2, 50.1) für wiederaufzuwärmende Raumluft (54.2) und Frischluft (54.1) vorgesehen sind, denen einstellbare Schieber (55) zugeordnet sind.

9. Erfindung nach Anspruch 8, **dadurch gekennzeichnet, dass** die Lufteintrittsöffnungen (50.2, 50.1) für wiederzuerwärmende Raumluft (54.2) und Frischluft (54.1) unmittelbar nebeneinander liegen und ein gemeinsamer Einstellschieber (55) über den Lufteintrittsöffnungen (50.2, 50.1) einstellbar derart angeordnet ist, dass beim Vergrößern des Querschnitts der einen Lufteintrittsöffnung der Querschnitt der anderen Lufteintrittsöffnung sich verringert und umgekehrt.

10. Erfindung nach Anspruch 8 oder 9, **dadurch gekennzeichnet, dass** dem Einstellschieber (55) bzw. den Einstellschiebern Ferneinstelleinrichtungen (64) zugeordnet sind.

11. Erfindung nach Anspruch 10, **dadurch gekennzeichnet, dass** der Ferneinstelleinrichtung des Einstellschiebers (55) oberhalb der Bänke (28) eine Handhabe (64,65) zugeordnet ist.

12. Erfindung nach Anspruch 10, **dadurch gekennzeichnet, dass** die Ferneinstelleinrichtung für die Einstellschieber (55) eine von Kabinenbenutzungsfaktoren abhängig arbeitende, automatische EinStelleinrichtung zugeordnet bzw. diese als solche ausgebildet ist.

13. Erfindung nach einem oder mehreren der übrigen Ansprüche, **dadurch gekennzeichnet, dass** der Einstellschieber (55) mit Aufhängung (56,57) zu einer gemeinsamen Baueinheit mit dem Lüfter (40) und seinen Luftführungselementen und / oder dem einen Teil des Hybridheizsystems (40a) und ggf. einem gemeinsamen Gehäuse vereinigt ist.

14. Erfindung nach einem oder mehreren der übrigen Ansprüche, **dadurch gekennzeichnet, dass** die Abdeckungen (82, 83) der Heizregister (81) und / oder des flüssigkeitsgeführten Wärmetauschers des Hybridheizsystems (81 a) und die Heißluft- und Kühlluftführungsbleche mit den Düsenwänden (86, 87) der Verteildüse (85) einheitlich gestaltet sind.

15. Erfindung nach einem oder mehreren der übrigen Ansprüche, **dadurch gekennzeichnet, dass** die übereinander, auf Abstand angeordneten, die verschieden warmen Luftströmungen führenden Bleche (102, 116, 120) mit Distanzelementen untereinander verbunden und ggf. an den Kabinenbauteilen oder ihren Umfassungen befestigt sind.

16. Erfindung nach einem oder mehreren der übrigen Ansprüche, **dadurch gekennzeichnet, dass** die Heizeinrichtungen (80) von mit vertikal verlaufenden Wärmetauschflächen (81.1) ausgestatteten Heizregistern (81) und/oder und / oder des flüssigkeitsgeführten Wärmetauschers des Hybridheizsystems (81a) gebildet sind.

17. Erfindung nach einem oder mehreren der übrigen Ansprüche, **dadurch gekennzeichnet,**
**dass** die Heizregister (81) und/oder der flüssigkeitsgeführte Wärmetauscher des Hybridheizsystems im horizontalen Teil des Luftführungsschachtes unmittelbar vor der Verteildüse (85) angeordnet sind.

18. Erfindung nach einem oder mehreren der übrigen Ansprüche, **dadurch gekennzeichnet, dass** den Heizregistern (81) und/oder dem flüssigkeitsgeführte Wärmetauscher des Hybridheizsystems ein den Eckbereich bildender, vorzugsweise aus Blech bestehender Umlenkteil (70) vorgeschaltet ist.

19. Erfindung nach Anspruch 18, **dadurch gekennzeichnet, dass** der Umlenkteil (70) zwischen dem vertikalen, der Luftführung dienenden Schacht (35) und dem Eintrittsbereich vor den Heizregistern und/oder dem flüssigkeitsgeführte Wärmetauscher des Hybridheizsystems (81a) sich erweitert.

20. Erfindung nach einem oder mehreren der übrigen Ansprüche, **dadurch gekennzeichnet, dass** der flüssigkeitsgeführte Wärmetauscher des Hybridheizsystems unter Verzicht auf Brandschutznotabschaltungen und /oder Fernüberwachungen nach dem Stand der Technik per Fernbedienung ein,- ausgeschaltet und geregelt werden kann.

21. Erfindung nach Anspruch 20, **dadurch gekennzeichnet, dass** die Fernbedienung sowohl kabelgebunden und/oder kabellos per Funkfrequenzstrecke und/oder per Lichtfrequenzstrecke und/oder per Internet und/der per Intranet und/oder per LAN und/oder per WLAN gebildet ist.

22. Erfindung nach einem oder mehreren der übrigen Ansprüche, **dadurch gekennzeichnet, dass** der flüssigkeitsgeführte Wärmetauscher des Hybridheizsystems unter Verzicht auf Brandschutznotabschaltungen und /oder Fernüberwachungen nach dem Stand der Technik per Zeitschaltung ein,- ausgeschaltet und geregelt werden kann.

23. Erfindung nach einem oder mehreren der übrigen Ansprüche, **dadurch gekennzeichnet, dass** der flüssigkeitsgeführte Wärmetauscher des Hybridheizsystems über elektrische Flüssigkeitsventile mit dem flüssigkeitsgeführten Heizkreislauf der Hauszentralheizungsanlage verbunden wird in dessen technischer Erreichbarkeit sich die Kabine befindet.

24. Erfindung nach einem oder mehreren der übrigen Ansprüche, **dadurch gekennzeichnet, dass** der flüssigkeitsgeführte Wärmetauscher des Hybridheizsystems über elektrische Flüssigkeitsventile mit dem flüssigkeitsgeführten Warmwasserheizkreislauf der Hauszentralheizungsanlage verbunden wird in dessen technischer Erreichbarkeit sich die Kabine befindet.

25. Erfindung nach einem oder mehreren der übrigen Ansprüche, **dadurch gekennzeichnet, dass** der flüssigkeitsgeführte Wärmetauscher des Hybridheizsystems über elektrische Flüssigkeitsventile mit dem flüssigkeitsgeführten Heizkreislauf der Hausfernwärmeheizanlage verbunden wird.

26. Erfindung nach einem oder mehreren der übrigen Ansprüche, **dadurch gekennzeichnet, dass** der flüssigkeitsgeführte Wärmetauscher des Hybridheizsystems über elektrische Flüssigkeitsventile mit dem flüssigkeitsgeführten Warmwasserheizkreislauf der Hausfernwärmeheizanlage verbunden wird.

27. Erfindung nach einem oder mehreren der übrigen Ansprüche, **dadurch gekennzeichnet, dass** der flüssigkeitsgeführte Wärmetauscher des Hybridheizsystems über elektrische Flüssigkeitsventile mit einem eigens für diesen in die Hauszentralheizungsanlage und/oder Hausfernwärmeheizanlage intergierten flüssigkeitsgeführten Heizkreislauf, und von der übrigen Heizungskreisläufen unabhängigen verbunden wird.

28. Erfindung nach Ansprüchen 22 bis 27, **dadurch gekennzeichnet, dass** die elektrischen Flüssigkeitsventile auch als in Stufen und/oder stufenlos einstellbare Regelventile ausgebildet sind.

29. Erfindung nach Ansprüchen 22 bis 28, **dadurch gekennzeichnet, dass** die elektrischen Flüssigkeitsventile mit einer separaten und/oder in die allgemeine Kabinensteuerung intergierten elektronischen Steuerung geregelt werden.

30. Erfindung nach einem oder mehreren der übrigen Ansprüche, **dadurch gekennzeichnet, dass** die Heizkomponenten des Hybridheizsystems sowohl zeitgleich, als auch zeitversetzt betrieben werden können.

31. Erfindung nach einem oder mehreren der übrigen Ansprüche, **dadurch gekennzeichnet, dass** eine Komponente des Hybridheizsystems im Falle, dass Infrarotheizelemente in der Kabine installiert sind auch durch diese Infrarotheizelemente gebildet werden können.

32. Erfindung nach einem oder mehreren der übrigen Ansprüche, **dadurch gekennzeichnet, dass** eine Komponente des Hybridheizsystems im Falle, dass ein nicht in einem eigens vorgesehenen Strömungskanal montierter Ofen in der Kabine installiert ist auch durch diesen Ofen gebildet werden kann.

33. Erfindung nach einem oder mehreren der übrigen Ansprüche, **dadurch gekennzeichnet, dass** eine Komponente des Hybridheizsystems im Falle, dass ein Hinterwandheizsystem in der Kabine installiert ist auch durch dieses Hinterwandheizsystem gebildet werden kann.

34. Erfindung nach einem oder mehreren der übrigen Ansprüche, **dadurch gekennzeichnet, dass** eine Komponente des Hybridheizsystems im Falle, dass ein Unterbankheizsystem in der Kabine installiert ist auch durch dieses Unterbankheizsystem gebildet werden kann.

35. Erfindung nach einem oder mehreren der übrigen Ansprüche, **dadurch gekennzeichnet, dass** eine Komponente des Hybridheizsystems im Falle, dass ein Deckenheizsystem in der Kabine installiert ist auch durch dieses Deckenheizsystem gebildet werden kann.

36. Erfindung nach einem oder mehreren der übrigen Ansprüche, **dadurch gekennzeichnet, dass** eine Komponente des Hybridheizsystems im Falle, dass ein Fußbodenheizsystem in der Kabine installiert ist auch durch dieses Fußbodenheizsystem gebildet werden kann.

37. Erfindung nach einem oder mehreren der übrigen Ansprüche, **dadurch gekennzeichnet, dass** eine Komponente des Hybridheizsystems im Falle, dass ein Wandheizsystem in der Kabine installiert ist auch durch dieses Wandheizsystem gebildet werden kann.

38. Erfindung nach einem oder mehreren der übrigen Ansprüche, **dadurch gekennzeichnet, dass** anstelle des Lüfters (40,41) auch ein Heizelement eingesetzt werden kann, dass einen erwärmten Luftstrom nach dem Prinzip der Thermik erzeugt.

39. Erfindung nach Anspruch 38, **dadurch gekennzeichnet, dass** die Intensität des thermischen Luftstrom, anstelle einer Lüfterregelung durch eine sensorgeführte Temperaturregelung des Heizelementes gebildet wird.

40. Erfindung nach Anspruch 38, **dadurch gekennzeichnet, dass** die Intensität des thermischen Luftstrom, anstelle einer Lüfterregelung durch eine stromgeführte Temperaturregelung des Heizelementes gebildet wird.

41. Erfindung nach Anspruch 38, **dadurch gekennzeichnet, dass** die Intensität des thermischen Luftstrom, anstelle einer Lüfterregelung durch eine spannungsgeführte Temperaturregelung des Heizelementes gebildet wird.

42. Erfindung nach Anspruch 38, **dadurch gekennzeichnet, dass** die Intensität des thermischen Luftstrom, anstelle einer Lüfterregelung durch eine flüssigkeitsflussgeführte Temperaturregelung des Heizelementes gebildet wird.

43. Erfindung nach einem oder mehreren der übrigen Ansprüche, **dadurch gekennzeichnet, dass** die Flüssigkeit des flüssigkeitsgeführten Wärmetauschers des Hybridheizsystems und/ oder die flüssigkeitsgeführten Ventile und oder die flüssigkeitsgeführte Temperaturregelung auch in einem anderen Aggregatzustand als Gas und/oder Dampf und/oder Gel geführt wird.

44. Erfindung nach einem oder mehreren der übrigen Ansprüche, **dadurch gekennzeichnet, dass** der flüssigkeitsgeführte Wärmetauscher des Hybridheizsystems auch in der Abkühlphase der Wärmekabine als Wärmerückgewinnungstauscher dienen kann, der die Restwärme wieder zurück in die kabinenexterne Zentral- und /oder Fernwärmeheizungsanlage führt.

45. Erfindung nach einem oder mehreren der übrigen Ansprüche, **dadurch gekennzeichnet, dass** der vertikale, der Luftführung dienenden Schacht (35) auch innerhalb seiner Strecke zum Kabineninnerraum hin teilweise geöffnet sein kann um bereits erwärmte Kabinenluft mit in den Luftstrom aufzunehmen.

46. Erfindung nach einem oder mehreren der übrigen Ansprüche, **dadurch gekennzeichnet, dass** der vertikale, der Luftführung dienenden Schacht (35) auch innerhalb seiner Strecke, zum Kabineninnerraum hin offen verlaufen kann, unter Nutzung einer thermischen Luftwalze die an der Kabineninnerwand entlang aufsteigt und zum oberen Heizelement (81, 81a) geführt wird.

47. Erfindung nach einem oder mehreren der übrigen Ansprüche, **dadurch gekennzeichnet, dass** die Komponenten (40 a, 81, 81a) des Hybridheizsystems wechselweise unten und / oder oben in dem Kabinenraum installiert sind.
